# EUROPEAN PATENT APPLICATION

(11) **EP 3 633 070 A1**
(43) Date of publication of application: **08.04.2020**
(21) Application number: 17911969.8
(22) Date of filing: 29.05.2017
(51) Int. Cl.: C25B 1/04, C25B 15/02, C25B 9/06, C25B 11/02

(54) **HYDROGEN GENERATION DEVICE AND HYDROGEN GENERATION METHOD**

(71) Applicant: Doosan Corporation, Seoul 04563 (KR)
(72) Inventor: CHOI, Young Mook, Suwon-si Gyeonggi-do 16675 (KR); SEO, Seung Won, Hwaseong-si Gyeonggi-do 18386 (KR); KANG, Tae Gon, Anseong-si Gyeonggi-do 17564 (KR)
(74) Representative: Stöckeler, Ferdinand
(86) International application number: PCT/KR2017/005580
(87) International publication number: WO 2018/221755

(57) **Abstract**

An embodiment of the present disclosure provides a hydrogen generation apparatus including an electrolyte solution chamber for accommodating a plurality of electrodes, and filled with an electrolyte solution so that the electrode is immersed, a power supply for applying a DC voltage to the electrode, and alternately applying the short pulse and the tailing pulse, a hydrogen generation amount measurer for measuring the hydrogen amount generated in the electrolyte solution chamber, and a consumed power measurer for measuring consumed power at the time of applying the DC voltage and the pulse voltage to the electrode.

## Description

### [Technical Field]

The present disclosure relates to a hydrogen generation apparatus and a hydrogen generation method for generating hydrogen by electrolysis.

### [Background Art]

Generally, a hydrogen generation method for generating hydrogen by direct current electrolysis of an electrolyte solution containing water is used. In the hydrogen generation method, hydrogen gas has been generated in a method for electrolyzing the electrolyte solution by installing an electrode having an anode and a cathode in a chamber, filling an electrolyte solution in the chamber, and then applying power.

However, there has been a problem in that the conventional hydrogen generation method using the electrolysis has about 60% of the heat amount of the generated gas compared to the power consumed to produce hydrogen gas by electrolysis (may produce by converting it into the gas heat amount of about 6kW at the time of consuming 10kW power), and not only has a limit as an alternative energy in the absolute comparison of the heat amount but also is not practical due to its large size, except in a case where the conversion of fuel type from electricity to gas is required.

### [DISCLOSURE]

### [Technical Problem]

The present disclosure provides a hydrogen generation method to enhance the generation efficiency of hydrogen.

An object of the present disclosure is not limited to the above description and other objects and advantages of the present disclosure that are not mentioned may be understood by the following description.

### [Technical Solution]

A hydrogen generation apparatus according to an embodiment of the present disclosure may include an electrolyte solution chamber for accommodating a plurality of electrodes, and filled with an electrolyte solution so that the electrode is immersed; a power supply for applying a DC voltage to the electrode, and alternately applying the short pulse and the tailing pulse; a hydrogen generation amount measurer for measuring the hydrogen amount generated in the electrolyte solution chamber; and a consumed power measurer for measuring consumed power at the time of applying the DC voltage and the pulse voltage to the electrode.

In an embodiment of the present disclosure, the hydrogen generation apparatus may further include a consumed power measurer for measuring consumed power of the power supply.

In an embodiment of the present disclosure, the power supply may use a frequency of 5KHz or more at the time of applying the pulse voltage.

Further, a hydrogen generation method according to an embodiment of the present disclosure may include immersing an electrode that immerses an electrolyte solution in a plurality of electrodes; applying a DC voltage that applies a DC voltage of 1.8V to 2V to the electrode; and applying a pulse that alternately applies to the electrode the short pulse and the tailing pulse in which a voltage gradually decreases.

In an embodiment of the present disclosure, in the applying the pulse, the tailing pulse application may be progressed for a longer time than the short pulse application.

In an embodiment of the present disclosure, the short pulse voltage may be applied at (1.8V to 2V) ± 0.6V.

In an embodiment of the present disclosure, in the applying the pulse, a frequency of 5KHz or more may be applied.

### [Advantageous Effects]

According to an embodiment of the present disclosure, it is possible to apply the pulse voltage to react with the ions before the electric double layer is generated to increase the hydrogen generation speed, thereby enhancing the hydrogen generation efficiency.

The effects of the present disclosure are not limited to the above-described effects, but should be understood to include all the effects inferable from the configuration of the disclosure described in the detailed description or claims of the present disclosure.

### [Description of Drawings]

FIG. 1 is a schematic diagram illustrating a hydrogen generation apparatus according to an embodiment of the present disclosure.
FIG. 2 is a flowchart illustrating a hydrogen generation method according to an embodiment of the present disclosure.
FIG. 3 is a diagram illustrating a voltage/current waveform by a hydrogen generation method according to an embodiment of the present disclosure.
FIG. 4 is a graph illustrating the efficiency during the generation of hydrogen by a hydrogen generation method according to an embodiment of the present disclosure.

### [Best Mode]

Hereinafter, the present disclosure will be described with reference to the accompanying drawings. However, the present disclosure may be implemented in various different forms, and therefore, is not limited to the embodiments described herein. Further, in the drawing, in order to clearly explain the present disclosure, parts not relevant to the description have been omitted, and similar parts have been denoted by similar reference numerals throughout the specification.

Throughout the specification, when a part is "connected" to another part, it includes not only "directly connected" but also "indirectly connected" with another member interposed therebetween. Further, when a part is said to "include" a certain component, it means that it may further include other components, without excluding the other components unless otherwise stated.

Hereinafter, embodiments of the present disclosure will be described in detail with reference to the accompanying drawings.

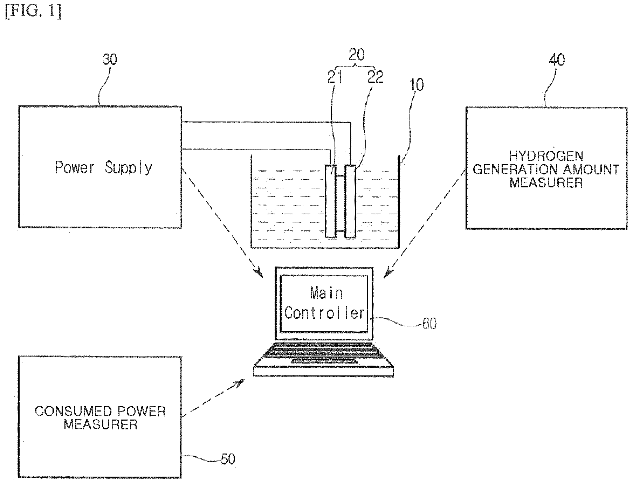

FIG. 1 is a schematic diagram illustrating a hydrogen generation apparatus according to an embodiment of the present disclosure.

Referring to FIG. 1, a hydrogen generation apparatus according to an embodiment includes an electrolyte solution chamber 10, a power supply 30, a hydrogen generation amount measurer 40, a consumed power measurer 50, and a controller 60.

The electrolyte solution containing water is filled in the electrolyte solution chamber 10. As the electrolyte solution, an electrolyte solution that may be used for generating hydrogen by electrolysis, for example, an aqueous potassium hydroxide solution may be applied. Further, a unit cell 20 having a plurality of electrodes 21, 22 is disposed in the electrolyte solution chamber. At this time, the plurality of electrodes are disposed to be spaced at a predetermined interval apart from each other. As a cathode 21 and an anode 22 constituting the electrode, a material used for electrolysis of the electrolyte solution, for example, platinum or the like may be used.

For example, two or more electrodes are arranged in a state of being disconnected from each other in the electrolyte solution chamber 10, and each electrode may be formed in a flat plate shape. At this time, the electrodes are all formed to have the same thickness, and the intervals of the respective electrodes may also be arranged to be the same as the thickness of the electrodes.

The power supply 30 includes a pulse generator. Therefore, the power supply applies the DC voltage and the pulse voltage to the electrode. The DC voltage applied from the power supply may be 1.8V to 2V. The waveform (time change) of the voltage applied from the power supply 30 to the electrode may be changed variously. That is, the pulse voltage is alternately applied with the short pulse and the tailing pulse with time difference. At this time, the short pulse voltage may be (1.8V to 2V) ± 0.6V.

The hydrogen generation amount measurer 40 and the consumed power measurer 50 apply the DC voltage and the pulse voltage and then measure the generation amount and consumed power of hydrogen generated in the electrolyte solution chamber after a predetermined application time has elapsed.

The controller 60 is electrically connected to the power supply 30, the hydrogen generation amount measurer 40, the consumed power measurer 50, and the like to collect and operate information provided from the respective configurations, and display the information on a display, or the like.

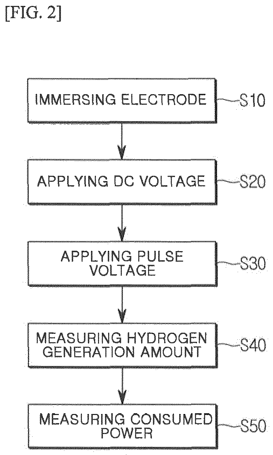

FIG. 2 explains a method for generating hydrogen by using the above-described hydrogen generation apparatus as follows.

Referring to FIG. 2, the hydrogen generation method according to an embodiment includes immersing an electrode (operation S10), applying a DC voltage (operation S20), and applying a pulse voltage (operation S30).

The immersing the electrode (operation S10) is an operation of immersing the unit cell provided with a plurality of electrodes in the electrolyte solution chamber. The electrolyte solution chamber is filled with an electrolyte solution containing water. Hydrogen gas is generated at the cathode of the electrodes by the electrolysis of the electrolyte solution.

The applying the DC voltage (operation S20) is an operation of applying a DC voltage to the electrode. At this time, the applied DC voltage may be 1.8V to 2V. That is, it is possible to apply the DC voltage to the electrodes immersed in the electrolyte solution, thereby generating hydrogen on the surface of the cathode.

An alkaline electrolytic device uses an alkaline solution as an electrolyte, and the hydroxyl group (OH⁻) moves through an anion exchange membrane to meet the applied charge to generate hydrogen. The minimum theoretical voltage required for this reaction is about 1.2V, and the preferred DC voltage in this embodiment is 1.8V to 2V.

The higher the applied voltage, the higher the amount of hydrogen generated, but the higher the consumed power also used. However, when the DC voltage is applied thereto, the ions reacted by the electric double layer generated around the electrode are limited, and even if the consumed power is increased, the difference from the ideal line of efficiency relative to the consumed power becomes large. Therefore, this embodiment further includes applying a pulse voltage.

The applying the pulse voltage(operation S30) is an operation of applying a pulse voltage to an electrode. At this time, the short pulse and the tailing pulse in which the voltage gradually decreases are alternately applied. In the applying the pulse voltage (operation S30), the pulse voltage applied to the electrodes may be (1.8V to 2V) ± 0.6V. The frequency of the pulse generator used in the applying the pulse is 5KHz or more, and preferably 7 to 15KHz.

The hydrogen generating method according to an embodiment may further include measuring the hydrogen generation amount (operation S40) and measuring the consumed power (operation S50) that measure the hydrogen generation amount and the consumed power that apply the DC voltage and the pulse voltage to the electrodes and then are generated in the electrolyte solution chamber after a predetermined application time has elapsed.

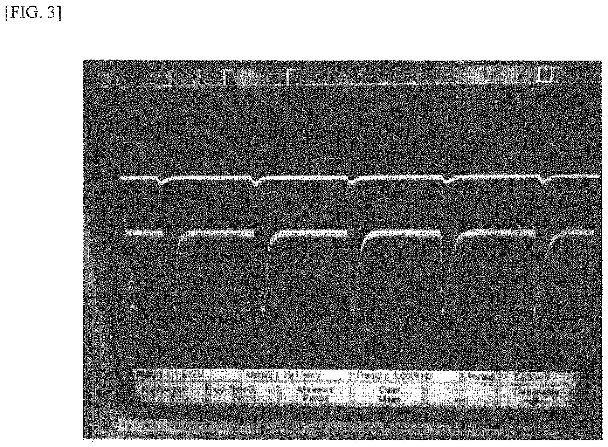

FIG. 3 is a diagram schematically illustrating the waveform of the voltage V applied to the electrode and the waveform of the current I flowing into the anode in the hydrogen generation method according to an embodiment of the present disclosure.

Referring to FIG. 3, in the hydrogen generation method according to an embodiment of the present disclosure, the pulse electrolysis is performed by alternately and repeatedly applying the short pulse P and the tailing pulse TP following the short pulse P to the electrodes.

The tailing pulse TP has a waveform in which the voltage V gradually decreases over a longer time than the application time of the short pulse P connecting the tail of the short pulse P. The application time of the short pulse P and the application time of the tailing pulse TP are not particularly limited but in an embodiment, the application time of the tailing pulse is progressed longer than the application time of the short pulse.

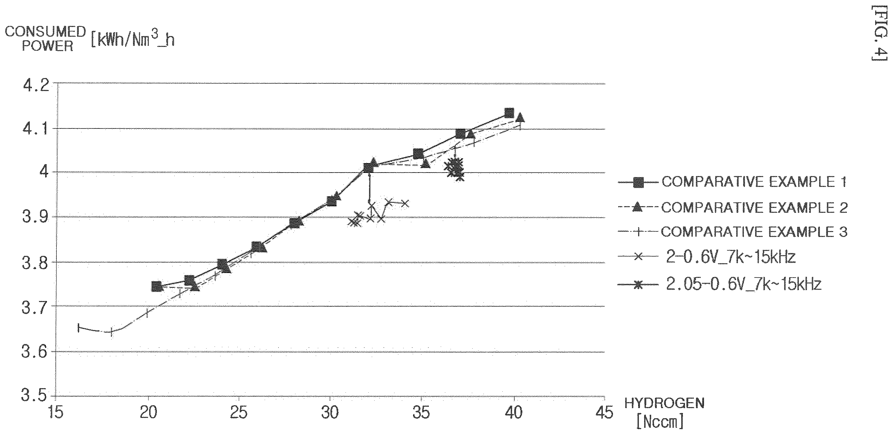

FIG. 4 is a graph illustrating the efficiency during the generation of hydrogen by the hydrogen generation method according to an embodiment of the present disclosure.

Referring to FIG. 4, Comparative Examples 1 to 3 illustrate a case applying only a general DC voltage, Embodiment 1 illustrates a case of applying a pulse voltage of 2 to 0.6 V in a frequency range of 7 to 15 KHz, and Embodiment 2 illustrates a case of applying a pulse voltage of 2.05 to 0.6V in the frequency range of 7 to 15KHz.

As described above, when applying the pulse voltage of (1.8V to 2V) ± 0.6V, the consumed power required to generate the similar amount of hydrogen is reduced compared to the case of applying only the general DC voltage, which means that the hydrogen generation efficiency is associated.

The reason why the efficiency is enhanced is because the hydrogen generation reaction is actively performed while the potential difference around the electrode is changed due to a change in the instantaneous voltage and the bubbles generated in the catalyst or the electrode film are removed.

The foregoing description of the present disclosure is intended for illustration, and it will be understood by those skilled in the art to which the present disclosure pertains that the present disclosure may be easily modified in other specific forms without changing the technical spirit or essential features of the present disclosure.

That is, it should be understood that the above-described embodiments are illustrative in all respects and not restrictive. For example, each component described as a singular type may also be implemented in a distributed manner, and similarly, components described as being distributed may be implemented in a combined form.

Therefore, the scope of the present disclosure is represented by the following claims, and it should be construed that all changes or modifications derived from the meaning and scope of the claims and equivalent concepts thereof are included in the scope of the present disclosure.

## Claims

1. A hydrogen generation apparatus, comprising:
an electrolyte solution chamber for accommodating a plurality of electrodes, and filled with an electrolyte solution so that the electrode is immersed;
a power supply for applying a DC voltage of 1.8V to 2V to the electrode, and alternately applying the short pulse and the tailing pulse;
a hydrogen generation amount measurer for measuring the hydrogen amount generated in the electrolyte solution chamber; and
a consumed power measurer for measuring consumed power at the time of applying the DC voltage and the pulse voltage to the electrode.

2. The hydrogen generation apparatus of claim 1, further comprising a consumed power measurer for measuring consumed power of the power supply.

3. The hydrogen generation apparatus of claim 1,
wherein the power supply uses a frequency of 5KHz or more at the time of applying the pulse voltage.

4. A hydrogen generation method, comprising:
immersing an electrode that immerses an electrolyte solution in a plurality of electrodes;
applying a DC voltage that applies a DC voltage of 1.8V to 2V to the electrode; and
applying a pulse voltage that alternately applies to the electrode the short pulse and the tailing pulse in which a voltage gradually decreases.

5. The hydrogen generation method of claim 4,
wherein in the applying the pulse voltage, the tailing pulse application is progressed for a longer time than the short pulse application.

6. The hydrogen generation method of claim 4,
wherein in the applying the pulse voltage, the applied pulse voltage is (1.8V to 2V) ± 0.6V.

7. The hydrogen generation method of claim 4,
wherein in the applying the pulse, a frequency of 5KHz or more is applied.
